# EUROPEAN PATENT APPLICATION

(11) **EP 3 546 780 A1**
(43) Date of publication of application: **02.10.2019**
(21) Application number: 18461566.4
(22) Date of filing: 08.06.2018
(51) Int. Cl.: F16D 3/77

(54) **FLEXIBLE ROTARY COUPLING**

(30) Priority: 29.03.2018 EP 18461543
(71) Applicant: Goodrich Corporation, Charlotte, NC 28217 (US)
(72) Inventor: Horoszczak, Adam, Wroclaw (PL); Slazyk, Rafal, 51-354 Wroclaw (PL)
(74) Representative: Dehns

(57) **Abstract**

A flexible rotary coupling (2) includes: a first rotary element (4); a second rotary element (6); a first annular flexible diaphragm (10) fastened to the first rotary element (4) at a radially inner mounting portion (60) and at a radially outer mounting portion (64) to the second rotary element (6); and a plurality of fasteners (80;82) connecting the first annular flexible diaphragm (10) to the first rotary element (4) and the second rotary element (6).

## Description

### TECHNICAL FIELD

The present disclosure relates generally to flexible rotary couplings as may be used, for example, to couple two rotary shafts or tubes.

### BACKGROUND

Flexible rotary couplings are used in a wide range of applications. Commonly such couplings are used to connect two rotary shafts, accommodating a certain degree of misalignment between the shafts. A known such coupling comprises a flexible diaphragm welded at its radially inner end to one end of one rotary element, for example a spacer tube, and fastened by bolts at its radially outer end to a flange of a second rotary element, for example a shaft or hub for attachment to a shaft. In some constructions, a guard element is also attached to the flange of the second element on the opposite side of the diaphragm so as to overlie the surface of the diaphragm remote from the second element, thereby protecting the diaphragm.

While effective, this coupling is relatively complex to produce, particularly with regard to welding the costly diaphragm to a support. Should the diaphragm become damaged either during initial welding or in use, the diaphragm and its support element may, as a result, have to be scrapped. Also, such constructions may be heavy since the element to which the diaphragm is fastened at its radially outer end will need to be relatively large.

It would be desirable to provide a coupling which may mitigate the above problem.

### SUMMARY

From a first aspect there is provided a flexible rotary coupling that includes a first rotary element; a second rotary element; a first annular flexible diaphragm fastened to the first rotary element at a radially inner mounting portion and at a radially outer mounting portion to the second rotary element; and a plurality of fasteners connecting the first annular flexible diaphragm to the first rotary element and the second rotary element.

The first rotary element may include a first, radially outwardly projecting annular flange at one end thereof. The second rotary element may comprise a second, radially outwardly projecting annular flange at one end thereof. The second radially outwardly projecting annular flange may project further radially outwardly than the first radially outwardly projecting annular flange and opposed to the first radially outwardly projecting annular flange. The first annular flexible diaphragm is connected between the first radially outwardly projecting annular flange and a radially outward portion of the second radially outwardly projecting annular flange.

The flexible rotary coupling may further include: a third rotary element and a second annular flexible diaphragm fastened to the third rotary element at a radially inner mounting portion and at a radially outer mounting portion to the second rotary element; and a plurality of fasteners connecting the second annular flexible diaphragm to the third rotary element and the second rotary element.

The third rotary element may have a third radially outwardly projecting annular flange at one end thereof. The second rotary element may include a fourth, radially outwardly projecting annular flange at an end thereof opposite the second radially outwardly projecting annular flange. The fourth radially outwardly projecting annular flange may project further radially outwardly than the third radially outwardly projecting annular flange and may be opposed to the third radially outwardly projecting annular flange. The second annular flexible diaphragm may be connected between a radially outward portion of the fourth radially outwardly projecting annular flange and the third radially outwardly projecting annular flange.

The flexible rotary coupling may include: a plurality of circumferentially aligned openings in the radially inner mounting portion of the first and/or second annular flexible diaphragm and the first or third radially outwardly projecting annular flanges of the first or third rotary elements respectively; and a plurality of circumferentially aligned openings in the radially outer mounting portion of the first or second annular flexible diaphragm and the radially outward portion of the second or fourth radially outwardly projecting annular flanges. The plurality of fasteners may extend through the openings for connecting the first and second radially outwardly projecting annular flanges to the first annular flexible diaphragm.

The plurality of fasteners may connect the third and fourth radially outwardly projecting annular flanges to the second annular flexible diaphragm.

The radially outward portion of the second or fourth radially outwardly projecting annular flange may be axially spaced from a radially inner portion of the second or fourth radially projecting annular flange in a direction towards the first rotary element or third rotary element respectively.

The flexible rotary coupling may include a welded joint between the second radially outwardly projecting annular flange and the second rotary element.

The flexible rotary coupling may include a welded joint between the fourth radially outwardly projecting annular flange and the second rotary element.

The second rotary element and the second radially outwardly projecting annular flange may be integrally formed.

The fourth radially outwardly projecting annular flange and the second rotary element may be integrally formed.

The second rotary element may be a tubular element.

The first rotary element may include a hub.

The third rotary element may include a hub.

The first and/or second annular flexible diaphragm may be a planar disc.

The first and/or second annular flexible diaphragm may include a radially tapering web extending between the radially inner mounting portion and the radially outer mounting portion of the first and/or second annular flexible diaphragm.

The plurality of fasteners may include bolts.

From another aspect, there is provided a method of manufacturing a flexible coupling that includes: providing a first rotary element; providing a second rotary element; and fastening a first annular flexible diaphragm at a radially inner mounting portion to the first rotary element and at a radially outer mounting portion to the second rotary element.

The method may further include: providing a third rotary element; and fastening a second annular flexible diaphragm at a radially inner mounting portion to the third rotary element and at a radially outer mounting portion to the second rotary element.

The fastening may be effected by means of bolted connections.

### BRIEF DESCRIPTION OF THE DRAWINGS

An embodiment of the disclosure will now be described, by way of example only, and with reference to the accompanying drawings in which:
Figure 1 shows a cross-sectional view of an exemplary rotary flexible coupling;
Figure 2 shows a perspective view of the rotary flexible coupling shown in Figure 1;
Figure 3 shows a cross-sectional view of a diaphragm used in the rotary flexible covering of Figure 1.

### DETAILED DESCRIPTION

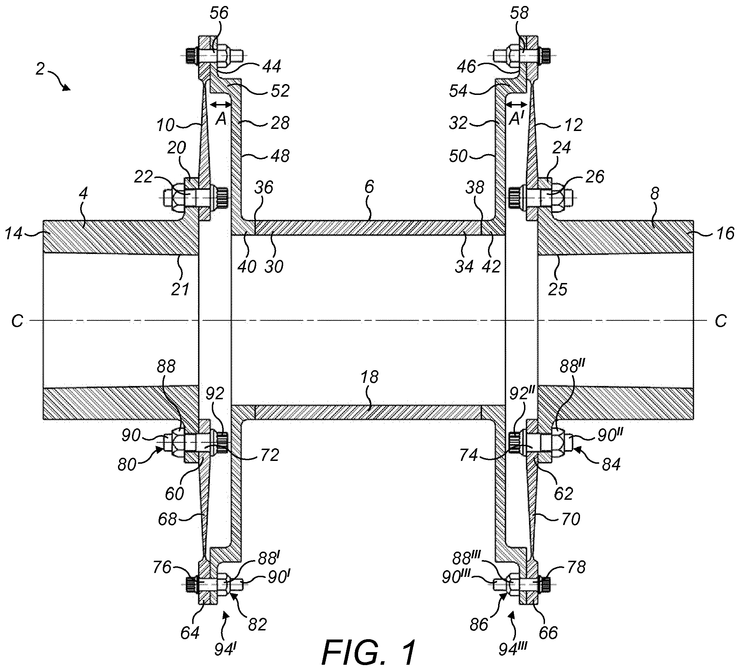

Figure 1 shows a rotary flexible coupling 2 in accordance with this disclosure.

A first element 4 is coupled to a second element 6 by means of a first annular flexible diaphragm 10. The second element 6 is in turn coupled to a third element 8 by means of a second annular flexible diaphragm 12. The first element 4 and third element 8 in this embodiment are hubs 4, 8 and the second element 6 is a tubular, spacer element 6 which spaces the first and third elements 4, 8 apart. The hubs 4, 8 may be suitably coupled to respective rotary shafts (not shown) by a suitable coupling, for example splines, fasteners, etc.. Alternatively, as shown, the internal bores of the hubs 4, 8 may be tapered to hold the shafts in place.

The first, second and third elements 4, 6, 8 and the first and second diaphragms 10, 12 may be made from any suitable material, for example a metallic material, for example stainless steel.

The hubs 4, 8 as illustrated are formed as tubular elements typically having thicker walls 14, 16 than the wall 18 of the tubular spacer element 6. As shown in Figure 1, the first, second and third elements 4, 6, 8 are, in one configuration all arranged around a common axial centreline C; however, the coupling 2 is flexible, so will be able to flex so as to accommodate at least angular misalignment of the first and third elements 4, 8, and thus of the respective rotary shafts to which they are connected.

The hubs 4, 8 and the spacer element 6 are substantially rigid such that when bending moments are applied to the coupling 2, the hubs 4, 8 and spacer element 6 will substantially maintain their shape, but flexure of the coupling 2 will be permitted due to deformation of the first and second diaphragms 10, 12.

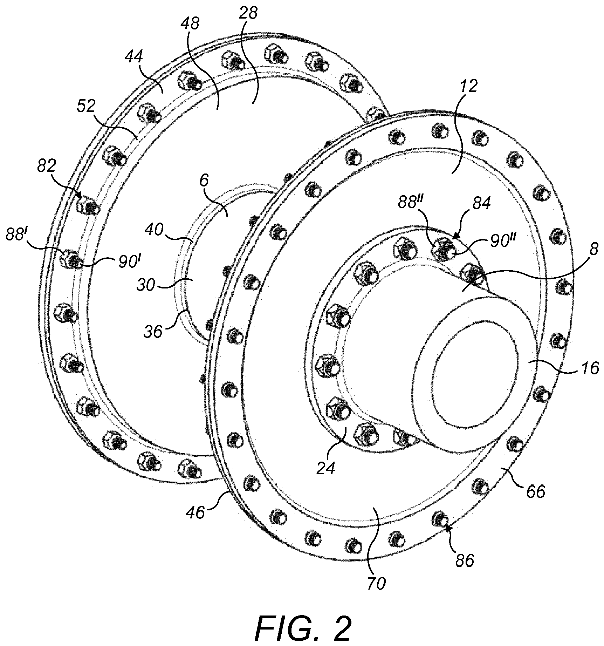

The first element 4 has a first, radially outwardly projecting annular flange 20 formed at one end 21 thereof. The first radially outwardly projecting annular flange 20 extends around the entire circumference of the first element 4. The first radially outwardly projecting annular flange 20 has a plurality of circumferentially spaced openings 22 formed therein. The openings 22 may be circumferentially equispaced, as shown. In the illustrated embodiment and as can be seen in Figure 2, there are twelve such openings 22 in the flange 20; however, there may be more or fewer openings, depending on the size of the first radially outwardly projecting annular flange 20.

The third element 8 is similar to the first element 4. In the embodiment shown in Figures 1 and 2 the third element 8 is a mirror image of the first element 4. The third element 8 has a third radially outwardly projecting annular flange 24 at one end 25 thereof which corresponds to the first radially outwardly projecting annular flange 20 of the first element 4, and a plurality of openings 26 corresponding to openings 22 in the first flange 20. Of course the third element 8 need not be a mirror image of the first element 4 and may have a different shape, inner diameter, outer diameter, number of openings 26 and so on.

The second element 6, or spacer tube 6 includes a second radially outwardly projecting annular flange 28 at one end 30 thereof and a fourth radially outwardly projecting annular flange 32 at the opposite end 34 thereof. The second radially outwardly projecting annular flange 28 extends radially outwardly further than the first radially outwardly projecting annular flange 20 and the fourth radially outwardly projecting annular flange 32 extends radially outwardly further than the third radially outwardly projecting annular flange 24. In the embodiment shown in Figures 1 and 2 the first and third radially outwardly projecting annular flanges 20, 24 extend radially outwardly the same distance as each other and the second and fourth radially outwardly projecting annular flanges 28, 32 extend radially outwardly the same distance as each other. In other embodiments, however, the first and third flanges 20, 24 may extend radially outwardly a different distance from each other and the second and fourth flanges 28, 32 may extend radially outward a different distance from each other.

As shown in Figure 1, the second and fourth radially outwardly projecting annular flanges 28, 32 may be connected to the ends 30, 34 of the second element 6 by a respective welded joint 36, 38. Alternatively, the second and fourth radially projecting annular flanges 28, 32 may be integrally formed with the second element 6, for example by casting or additive manufacturing.

The second and fourth radially outwardly projecting annular flanges 28, 32 may each have, as shown in Figure 1, a respective axially extending, radially inner portion 40, 42 welded to the opposed ends 30, 34 of the third element 6.

The second and fourth radially outwardly projecting annular flanges 28, 32 also each have a respective radially outward portion 44, 46. The radially outward portion 44 of the second radially outwardly projecting annular flange 28 is axially spaced from the radially inner portion 40 of the second flange 28 in a direction toward the first element 4. The radially outward portion 46 of the fourth radially outwardly projecting annular flange 32 is also axially spaced from the radially inner portion 42 of the fourth radially outwardly projecting annular flange 32 in a direction toward the third element 8. The second and fourth radially outwardly projecting annular flanges 28, 32 may therefore be dished in shape with the radially outward portions 44, 46 being spaced from a planar, radially outwardly extending body portion 48, 50 of the second and fourth radially outwardly projecting annular flanges 28, 32 by an axially extending wall 52, 54. As will be described further below, this dished shape may facilitate assembly of the coupling 2. The dished shape will also provide space for deformation of the diaphragms 10, 12 or part of the diaphragms 10, 12 when the diaphragms 10, 12 are flexed. The planar body portion 48, 50 of the second and fourth radially outwardly projecting annular flanges 28, 32 is of generally constant axial thickness along its radial length.

The second and fourth radially outwardly projecting annular flanges 28, 32 are substantially rigid and do not flex to any appreciable extent during operation of the coupling 2.

The radially outward portions 44, 46 of the second and fourth radially outwardly projecting annular flanges 28, 30 have openings 56, 58 formed therein. The openings 56, 58 may be arranged circumferentially equispaced around the radially outward portions 44, 46. In the illustrated embodiment and as can be seen in Figure 2, there are twenty-four such openings 56, 58 in each flange 28, 32; however, there may be more or fewer openings, for any given application

As discussed above, the coupling 2 includes a first annular flexible diaphragm 10 and a second annular flexible diaphragm 12. The first annular flexible diaphragm 10 is connected between the first radially outwardly projecting annular flange 20 and the radially outward portion 44 of the second radially outwardly projecting annular flange 28. The second annular flexible diaphragm 12 is connected between the third radially outwardly projecting annular flange 24 and the radially outward portion 46 of the fourth radially outwardly projecting annular flange 32.

The first annular flexible diaphragm 10 is located axially between the first radially outwardly projecting annular flange 20 and the second radially projecting annular flange 28. The second annular flexible diaphragm 12 is located axially between the third and fourth radially outwardly projecting annular flanges 24, 32.

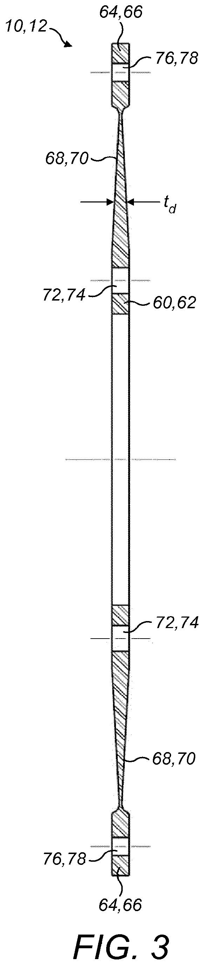

Figure 3 shows a diaphragm 10, 12 in more detail.

The first or second annular flexible diaphragm 10, 12 each comprises a radially inner mounting portion 60, 62, a radially outer mounting portion 64, 66 and a radially tapering web 68, 70 extending between the radially inner mounting portion 60, 62, and the radially outer mounting portion 64, 66. In the described embodiment, the thickness t_{d} of the web 68, 70 becomes smaller with increasing radius. However, in other embodiments, other thickness distributions may be used, for example with a decreasing thickness with increasing radius. Indeed any suitable form of flexible diaphragm may be used in accordance with this disclosure. For example, diaphragms 10, 12 with different web profiles may be used.

The diaphragm 10, 12 is generally planar in the embodiment illustrated. Such an arrangement may be advantageous in that it may simplify manufacture of the diaphragm 10, 12. It also results in much lower material waste due to the simple shape.

A plurality of circumferentially spaced openings 72, 74, 76, 78 is provided in the radially inner and outer mounting portions 60, 62, 64, 66 of the annular flexible diaphragms 10, 12. These are aligned circumferentially and radially respectively with the openings 22, 56, 26, 58 provided in the first and second or third and fourth radially outwardly projecting annular flanges 20, 24, 28, 32 of the first, second and third elements 4, 6, 8 respectively.

As can be seen from Figures 1 and 2, a plurality of first fasteners 80, 84, extend through the aligned openings 22, 72, 26, 74 for connecting the first radially outwardly projecting annular flange 20 to the first annular flexible diaphragm 10, and connecting the third radially outwardly projecting annular flange 24 to the second annular flexible diaphragm 12. A plurality of second fasteners 82, 86 extend through the aligned openings 56, 76, 58, 78 for connecting the second radially outwardly projecting annular flange 28 to the first annular flexible diaphragm 10, and connecting the fourth radially outwardly projecting annular flanges 32 to the second annular flexible diaphragm 12.

In the present embodiment, the first fasteners 80, 84, each comprises a nut 88, 88", and a bolt 90, 90" and the second fasteners 82, 86 each comprises a nut 88', 88'" and a bolt 90', 90'". Each of the bolts 90, 90', 90", 90'" comprises a head 92, 92', 92", 92'". It will be seen from Figure 1 that axial offsets A, A' between the radially inner and outer portions 40, 42, 44, 46 of the second and fourth radially outwardly projecting flanges 28, 32 accommodate the heads 92, 92" of the bolts 90, 90" of the first fasteners 80, 84. Also, the nut 88', 88'" of each second fastener 82, 86 is accommodated within the annular space 94', 94'" arranged radially outward of the axially extending wall 52, 54, and between the body portion 48, 50 and radially outer portion 44, 46 of the second or fourth radially outwardly projecting flanges 28, 32.

To assemble the coupling 2, the first and second annular flexible diaphragms 10, 12 may first be attached to the first and third elements 4, 8 via the first fasteners 80, 84. The first and third elements 4, 8 may then be attached to the first and second annular flexible diaphragms 10, 12 via the second fasteners 82, 86.

In use, rotary motion and torque will be transferred between the first and third elements 4, 8 via the second element 6 and diaphragms 10, 12. Angular or axial misalignment of the first and third elements 4, 6 is accommodated by flexing of the diaphragms 10, 12.

It will be appreciated that the embodiments described above may provide a number of advantages over the prior art arrangements described above. Firstly, the construction obviates the need to weld a diaphragm to a support element such as a spacer tube. As diaphragms are potentially expensive elements both in terms of cost and production time, damage to either a diaphragm or spacer tube during welding may require scrapping of the diaphragm and spacer tube, which may already have a diaphragm successfully welded thereto. Welding of a simple attachment flange to the spacer tube means that if damage is incurred, the cost of the scrappage will not be as great.

The bolted construction allows the coupling to be installed and uninstalled very easily. It will also allow a damaged diaphragm to be replaced easily, something which was not possible with the earlier construction where the entire spacer tube would need to be replaced.

The attachment of the diaphragm to the hubs at its radially inner end also means that a smaller hub may be used, resulting in a lighter and potentially more simple hub.

The second and fourth radially outwardly extending flanges of the spacer tube also act as guards for the diaphragms, thereby obviating the need for additional guard elements as were previously provided.

While the coupling 2 has been illustrated above as being applied in joining two shafts or hubs through a spacer tube, with two diaphragms being provided, one at either end of the spacer tube, it will be appreciated that the coupling may in its simplest form comprise just a single diaphragm arranged between two rotary elements, as illustrated at either end of the coupling shown.

The coupling may have a broad range of applications for example in industrial and aircraft power transmission systems, shaft couplings and so on.

Thus it will be appreciated that the embodiment described above is exemplary only and that various modifications may be made thereto without departing from the scope of the disclosure. For example, guards, torquemeters, pilots, flail rings, or any other features common I traditional design may be used in combination with the disclosed features of the rotary flexible coupling. Furthermore, while in the described embodiment the radially outwardly extending flanges extend perpendicularly to the centreline C, in other embodiments they may extend at a small angle to the perpendicular.

## Claims

1. A flexible rotary coupling (2) comprising:
a first rotary element (4);
a second rotary element (6);
a first annular flexible diaphragm (10) fastened to the first rotary element (4) at a radially inner mounting portion (60) and at a radially outer mounting portion (64) to the second rotary element (6); and a plurality of fasteners (80;82) connecting the first annular flexible diaphragm (10) to the first rotary element (4) and the second rotary element (6).

2. The flexible rotary coupling of claim 1, wherein:
the first rotary element (4) comprises a first, radially outwardly projecting annular flange (20) at one end (21) thereof;
the second rotary element (6) comprises a second, radially outwardly projecting annular flange (28) at one end (30) thereof, the second radially outwardly projecting annular flange (28) projecting further radially outwardly than the first radially outwardly projecting annular flange (20) and opposed to the first radially outwardly projecting annular flange (20); and
the first annular flexible diaphragm (10) is connected between the first radially outwardly projecting annular flange (20) and a radially outward portion (44) of the second radially outwardly projecting annular flange (28).

3. The flexible rotary coupling of claim 1 or 2, further comprising a third rotary element (8) and a second annular flexible diaphragm (12) fastened to the third rotary element (8) at a radially inner mounting portion (62) and at a radially outer mounting portion (66) to the second rotary element (6); and a plurality of fasteners (84;86) connecting the second annular flexible diaphragm (12) to the third rotary element (8) and the second rotary element (6).

4. The flexible rotary coupling of claim 3, wherein:
the third rotary element (8) has a third radially outwardly projecting annular flange (24) at one end (25) thereof;
the second rotary element (6) comprises a fourth, radially outwardly projecting annular flange (32) at an end (34) thereof opposite the second radially outwardly projecting annular flange (28), the fourth radially outwardly projecting annular flange (32) projecting further radially outwardly than the third radially outwardly projecting annular flange (24) and opposed to the third radially outwardly projecting annular flange (24); and
the second annular flexible diaphragm (12) is connected between a radially outward portion (46) of the fourth radially outwardly projecting annular flange (32) and the third radially outwardly projecting annular flange (24).

5. The flexible rotary coupling of claim 2 or 4, comprising:
a plurality of circumferentially aligned openings (22; 26; 72; 74) in the radially inner mounting portion (60; 62) of the first and/or second annular flexible diaphragm (10; 12) and the first or third radially outwardly projecting annular flanges (20; 24) of the first or third rotary elements (4; 8) respectively; and
a plurality of circumferentially aligned openings (56; 58; 76; 78) in the radially outer mounting portion (64; 66) of the first or second annular flexible diaphragm (10; 12) and the radially outward portion (44; 46) of the second or fourth radially outwardly projecting annular flanges (28; 32); wherein
the plurality of fasteners (80; 82; 84; 86) extend through the openings (22; 26; 56; 58; 72; 74; 76; 78) for connecting the first and second radially outwardly projecting annular flanges (20; 28) to the first annular flexible diaphragm (10) and/or connecting the third and fourth radially outwardly projecting annular flanges (24; 32) to the second annular flexible diaphragm (12).

6. The flexible rotary coupling of any of claims 2 to 5, wherein the radially outward portion (44; 46) of the second or fourth radially outwardly projecting annular flange (28; 32) is axially spaced from a radially inner portion (40; 42) of the second or fourth radially projecting annular flange (28; 32) in a direction towards the first rotary element (4) or third rotary element (8) respectively.

7. The flexible rotary coupling of any of claims 2 to 6, further comprising a welded joint (36;38) between the second radially outwardly projecting annular flange (28) and the second rotary element (6) and/or between the fourth radially outwardly projecting annular flange (32) and the second rotary element (6).

8. The flexible rotary coupling of any of claims 2 to 6, wherein the second rotary element (6) and the second radially outwardly projecting annular flange (28) and/or the fourth radially outwardly projecting annular flange (32) and the second rotary element (6) are integrally formed.

9. The flexible rotary coupling of any preceding claim, wherein the second rotary element (6) is a tubular element (6).

10. The flexible rotary coupling of any preceding claim, wherein the first rotary element (4) and /or third rotary element (8) comprises a hub (4; 8).

11. The flexible rotary coupling of any preceding claim, wherein the first and/or second annular flexible diaphragm (10; 12) is a planar disc, and optionally includes a radially tapering web (68; 70) extending between the radially inner mounting portion (60; 62), and the radially outer mounting portion (64; 66) of the first and/or second annular flexible diaphragm (10; 12).

12. The flexible rotary coupling of any preceding claim, wherein the plurality of fasteners (80; 82; 84; 86) comprise bolts (90; 90'; 90"; 90"').

13. A method of manufacturing a flexible coupling comprising:
providing a first rotary element (4);
providing a second rotary element (6); and
fastening a first annular flexible diaphragm (10) at a radially inner mounting portion (60) to the first rotary element (4) and at a radially outer mounting portion (64) to the second rotary element (6).

14. The method of claim 13 further comprising:
providing a third rotary element (8); and
fastening a second annular flexible diaphragm (12) at a radially inner mounting portion (62) to the third rotary element (8) and at a radially outer mounting portion (66) to the second rotary element (6).

15. The method of claim 13 or 14, wherein the fastening is effected by means of bolted connections (80, 82, 84, 86).
